# EUROPÄISCHE PATENTSCHRIFT

(11) **EP 1 801 372 B1**
(45) Veröffentlichungstag und Bekanntmachung des Hinweises auf die Patenterteilung: **30.03.2011**
(21) Anmeldenummer: 06007797.1
(22) Anmeldetag: 13.04.2006
(51) Int. Cl.: F01N 3/021, F01N 3/025

(54) **Partikelfilteranordnung und Verfahren zum Filtern von Abgasen**
Particulate filter arrangement und exhaust gas filtering method
Arrangement de filtre à particules and méthode de filtration de gaz d'échappement

(30) Priorität: 22.12.2005 DE 102005062050
(43) Veröffentlichungstag der Anmeldung: 27.06.2007
(73) Patentinhaber: ARK-Holding AG, 6300 Zug (CH)
(72) Erfinder: Stieglbauer, Herbert, 82377 Penzberg (DE)
(74) Vertreter: Verscht, Thomas Kurt Albert

(56) Entgegenhaltungen:
- WO-A-90/12950
- WO-A-97/43528
- DE-A1- 19 515 649
- US-A- 5 685 143
- US-B1- 6 935 105

## Beschreibung

Die vorliegende Erfindung betrifft grundsätzlich das Gebiet der Nachbehandlung von Abgasen. Genauer betrifft die vorliegende Erfindung gemäß einem ersten Aspekt eine Partikelfilteranordnung zum Filtern von Abgasen einer Brennkraftmaschine oder -anlage, insbesondere einer Diesel(brenn)kraftmaschine oder Dieselmotor, mit einem Einlaß und einem Auslaß, wobei im Strömungspfad der Abgase zwischen Einlaß und Auslaß wenigstens ein Partikelfilter angeordnet ist, wobei die Abgase in einer Leitung geführt werden, wobei die Leitung einen ersten Abschnitt aufweist, in welchem die Abgase im Wesentlichen in Richtung Auslaß geführt werden, wobei die Leitung ferner einen zweiten Abschnitt aufweist, in welchem die Abgase im Wesentlichen in Richtung Einlaß geführt werden. Gemäß einem zweiten Aspekt betrifft die vorliegende Erfindung eine Partikelfilteranordnung zum Filtern von Abgasen einer Brennkraftmaschine oder -anlage, insbesondere einer Diesel(brenn)kraftmaschine oder Dieselmotor, mit einem Einlaß und einem Auslaß, wobei im Strömungspfad der Abgase zwischen Einlaß und Auslaß wenigstens ein Umlenkelement zur Richtungsänderung der Abgasströmung vorgesehen ist. Gemäß einem dritten Aspekt betrifft die vorliegende Erfindung eine Partikelfilteranordnung zum Filtern von Abgasen einer Brennkraftmaschine oder -anlage, insbesondere einer Diesel(brenn)kraftmaschine oder Dieselmotor, mit einem Einlaß und einem Auslaß. Gemäß einem vierten Aspekt betrifft die vorliegende Erfindung ein Verfahren zum Filtern von Abgasen einer Brennkraftmaschine oder -anlage, insbesondere einer Diesel(brenn)kraftmaschine oder Dieselmotor, mittels einer Partikelfilteranordnung mit einem Einlaß und einem Auslaß.

Abgase, die von Verbrennungskraftmaschinen oder industriellen Prozessen erzeugt werden, enthalten im Allgemeinen potenziell gesundheitsschädliche Bestandteile, wie z.B. Kohlenwasserstoffe (HC), Kohlenmonoxid (CO), Stickoxide (NOₓ), und insbesondere auch teilchenförmige Bestandteile, wie z.B. Feinstaub. Derartige Bestandteile müssen in harmlose oder zumindest weniger gefährliche Bestandteile gewandelt werden, um die Menge von schädlichen Substanzen, die an die Umgebung abgegeben werden, zu reduzieren. Herkömmlicherweise werden daher die Abgase einer katalytischen Behandlung und/oder einem Filterprozess unterzogen.

Grundsätzlich sind im Stand der Technik auch Katalysatoren bekannt, welche dazu dienen, schädliche Bestandteile, wie z.B. SOₓ und NOₓ, aus den Abgasen zu entfernen. Daneben hat ein Katalysator auch den Effekt, dass die Temperatur von Abgasen erhöht wird, was wiederum die Zersetzung von Rußpartikel unterstützen kann.

Bei Dieselmotoren besteht grundsätzlich das Problem, dass in den Abgasen insbesondere Rußpartikel (CO) enthalten sind. Um diese aus den Abgasen zu entfernen, sind Partikelfilter bekannt. Der Partikelfilter kann zwar den Ruß aus den Abgasen entfernen, hat aber das Problem, dass er verstopft bzw. vollgeladen ist, wenn zu viele Rußpartikel in ihm gespeichert sind. Bei entsprechend hoher Temperatur (über ungefähr 600 °C) wird aber das CO zersetzt, und daher kann ein vollgeladener Filter bei einer derartigen Temperatur regenerieren. Es ist daher von besonderer Wichtigkeit, dass die Temperatur der Abgase vor bzw. bei der Filterung möglichst hoch ist, und insbesondere auch die Temperatur im Filter möglichst hoch ist, so dass die "Zündtemperatur" erreicht wird.

Von besonderer Wichtigkeit ist dabei, dass der Bauraum der gesamten Partikelfilteranordnung sowie der Partikelfilter selbst möglichst klein ist, und dass möglichst schnell eine hohe Temperatur erreicht wird, so dass der Selbstzündungseffekt startet, da ansonsten der Filter zu schnell verstopft und beispielsweise ein Kraftfahrzeug nicht mehr betriebsfähig ist. Insbesondere bei einer Fahrweise, bei welcher man täglich nur ein paar Minuten fährt ("morgendliches Brötchen holen"), kann der Filter sich immer mehr mit Rußpartikeln vollladen, ohne dass eine ausreichend hohe Temperatur zum Abbrennen des Rußes erreicht wird, so dass nach einiger Zeit das Kraftfahrzeug nicht mehr betriebsfähig ist und der Filter ausgewechselt werden muss. Daher geht es insbesondere auch darum wie schnell eine erforderlich hohe Temperatur erreicht wird. Dies sind im Stand der Technik bekannte Probleme, die mit dem Kaltstart eines Motors (mit einem entsprechenden kalten Katalysator) und mit "kalten Abgasen", wie sie von einem Dieselmotor austreten, verbunden sind.

Grundsätzlich sind die Temperaturen der Abgase von dem Typ des verwendeten Dieselmotors abhängig und im Fall von Kraftfahrzeugen selbstverständlich abhängig vom jeweiligen Typ. Normalerweise dürften in einem Kraftfahrzeug die Temperaturen der Abgase zwischen 150 und 210 °C liegen. Bei einem Saugmotor liegen die Temperaturen der Abgase bei etwa 280 °C und bei einem Turbolader bei 350 °C. Das Problem des Volladens eines erforderlichen Partikelfilters ist daher bei einem Saugmotor oder einem Turbolader wesentlicher weniger gravierend, da die Ausgangstemperaturen der Abgase bereits entsprechend hoch sind. Für normale Dieselmotoren stellt das Volladen bzw. Verstopfen des Partikelfilters in der Praxis ein gravierendes Problem dar, für das der Stand der Technik keine ausreichende Abhilfe leistet.

Bezüglich des Standes der Technik wird auf die WO 90/12950 hingewiesen, aus welcher ein Dieselrussfilter mit zusätzlicher Einrichtung zur Reduktion von Stickoxiden und/oder Oxidation von Kohlenmonoxid bekannt ist. Dieser Dieselrussfilter besteht aus mehreren im Abgaskanal abwechselnd hintereinander angeordneten ersten und zweiten mit Durchströmkanälen versehenen Wabenkörpern, von denen die ersten Wabenkörper mit einer ersten Oberflächenschicht versehen sind, die in an sich bekannter Weise katalytisch die Umsetzung von Stickoxyden und Kohlenmonoxyd zu Stickstoff bzw. Kohlendioxyd bewirkt, während die zweiten Wabenkörper mit einer zweiten Oberflächenschicht versehen sind, die in an sich bekannter Weise katalytisch eine Herabsetzung der Zündtemperatur des ihr anhaftenden Russes bewirkt.

Aus der WO 97/43528 A ist eine Vorrichtung zum Schalldämpfen und Reinigen von Abgasen bekannt, welche folgende umfasst: ein luftdichtes Gehäuse, das mit einem Abgas-Einlaßrohr und einem Abgas-Auslaßrohr verbunden ist und folgendes enthält: wenigstens zwei akustische Abteile sowie einen oder mehrere monolithische Körper, durch welche die Abgase in einer Strömungsrichtung in längsverlaufenden Kanälen oder Porositäten strömt, und ein oder mehrere Rohre oder Kanäle, wobei mindestens ein Rohr oder Kanal den einen oder mehrere der monolithischen Körper penetriert und Abgase in einer Strömungsrichtung führt, die entgegengesetzt zu der Strömungsrichtung in den Kanälen oder Porositäten des monolithischen Körpers ist, und wobei mindestens eines bzw. einer der Rohre oder Kanäle die mindestens zwei Abteile verbindet.

Aus der DE 195 15 649 A1. ist ein Filteraggregat zur Abfilterung von staub- bzw. aerosolhaltigen Teilchen aus gasförmigen Medien mittels Prallfiltration bekannt, welches zwei konzentrisch angeordnete Schlitzröhren umfasst, zwischen denen ein Gleichstrom-Hochspannungsfeld ausgebildet ist. Das zu reinigende Gas wird der inneren Schlitzröhre axial zugeführt und durchströmt den zwischen den beiden Schlitzröhren vorhandenen inneren Zwischenraum in radialer Richtung, wobei aufgrund strömungsdynamischer Kräfte die Teilchen an den Ablageflächen der äußeren Schlitzröhre abgelagert werden. Schließlich durchströmt das gereinigte Gas noch eine katalytische Reinigungseinrichtung, die in einem zwischen einem äußeren Mantelrohr und der äußeren Schlitzröhre gebildeten äußeren Zwischenraum angeordnet ist, bevor es in axialer Richtung das Filteraggregat verlässt.

Aus der US-A-5,685,143 ist ein katalytischer Abgasreiniger bekannt, der insbesondere zum Reinigen von Abgas verwendet wird, das aus Dieselmotoren ausgestoßen wird und Partikel enthält, welcher Abgasreiniger umfasst: eine Gehäusestruktur, in der angeordnet sind: eine Einrichtung zum Zuführen von Abgas in den Abgasreiniger, eine Einrichtung zum Entfernen von Abgas aus dem Abgasreiniger, eine Verbrennungskammer und mindestens ein Katalysatorelement, wobei die Einrichtung zum Zuführen von Abgas auf eine derartige Weise in der Verbrennungskammer des Abgasreinigers angeordnet ist, dass ein Abgasstrom in der Verbrennungskammer in eine Rotationsbewegung überführt werden kann, wodurch der Abgasstrom in einen Partikelstrom und einen eigentlichen Gasstrom aufgeteilt wird, in welchem Abgasreiniger das Katalysatorelement auf eine derartige Weise in der Verbrennungskammer angeordnet ist, dass mindestens der Partikelstrom in der Verbrennungskammer in eine Rotationsbewegung um das Katalysatorelement herum gebracht wird.

Aus der US-A-6,935,105 B1 ist eine Vorrichtung und ein Verfahren zum Behandeln von Strömungsmittelströmen bekannt. Die Strömungsmittelströme sind insbesondere Emissionen aus Magermotoren, wie zum Beispiel Dieselmotoren, welche mehrfache Katalysatoren verwenden, die ausgewählt sind, um Kohlenwasserstoffe, Kohlenmonoxid, teilchenförmige Materie und Stickstoffoxide zu entfernen. Die Vorrichtung und das Verfahren sehen ebenfalls einen Wärmeaustausch zwischen den Einlass- und Auslassabgasströmen, um die Katalysereaktionen aufrecht zu erhalten, und zwar indem die Katalysatoren in den Temperaturzonen plaziert werden, wo deren Betrieb verstärkt wird, und sie ebenfalls eine Regeneration eines Filters gestatten, der verwendet wird, um teilchenförmige Materie in den Strömen einzufangen.

Der Erfindung liegt daher die Aufgabe zugrunde, die Nachteile des Standes der Technik zu vermeiden, und insbesondere eine Partikelfilteranordnung der eingangs genannten Art derart weiterzubilden, dass sich besonders schnell eine ausreichend hohe Betriebstemperatur der Anordnung bzw. des Partikelfilters zur Vermeidung eines Volladens des Filters einstellt.

Die vorliegende Erfindung betrifft eine Partikelfilteranordnung gemäß Patentanspruch 1. Ferner betrifft die vorliegende Erfindung ein Verfahren zum Filtern von Abgasen einer Brennkraftmaschine oder -anlage gemäß Patentanspruch 18.

Bevorzugte Ausführungsbeispiele der Erfindung sind in den abhängigen Patentansprüchen offenbart.

Ein besonderer Vorteil der erfindungsgemäßen Ausbildung besteht darin, dass sich durch den sich durch die drei Abschnitte ergebende sozusagen "gefalteten" Strömungspfad der Abgase eine insgesamt sehr kompakte Partikelfilteranordnung ergibt, welche eine lange Wegstrecke für die Abgase aufweist, so dass die Verweildauer der Abgase in der Anordnung relativ lange ist. Insbesondere, wenn der Temperaturerhöhung der Abgase dienende Komponenten, wie z.B. Katalysatoren, im Strömungsmittelpfad angeordnet sind, wobei der lange Strömungspfad auch entsprechende Stellen für die Anordnung von solchen Bauteilen ermöglicht, erreichen die Abgase hohe Temperaturen, was sich zusammen mit der langen Verweildauer entsprechend günstig auf die sich in der gesamten Anordnung ergebende Gleichgewichtstemperatur bzw. auch auf die Geschwindigkeit, mit welcher sich eine derartige Gleichgewichtstemperatur einstellt, auswirkt. Durch das Vorhandenseins eines dritten Leitungsabschnitts gibt es zwei innere Leitungsabschtitte, deren Wärmeabgabe an die Umgebung durch einen äußeren Leitungsabschnitt minimiert wird. Selbstverständlich kann auch die Fartikelfilteranoprdnung eine höhere Zahl von Leitungsabschnitten aufweisen, in welchen das Abgas jeweils im Wesentlichen in Richtung Einlaß oder im Wesentlichen in Richtung Auslaß geführt wird. Somit wird bei der Durchströmung der Leitung mitgeführte und/oder katalytisch erzeugte Wärme optimal zur Filterregeneration genutzt. Die folgenden Beschreibungen der Anordnung und Wirkung von Filtern und Katalysatoren entlang der Leitung werden zur Vereinfachung für nur drei Leitungsabschnitte beschrieben. Sie treffen jedoch sinngemäß auch für mehr als drei Leitungsabschnitte zu.

Vorzugsweise durchströmen die Abgase den ersten, zweiten und dritten Abschnitt der Leitung nacheinander. Die ersten, zweiten und dritten Abschnitte der Leitung müssen dabei nicht notwendigerweise unmittelbar aufeinander folgen, sondern es können auch entsprechende dazwischenliegende Abschnitte angeordnet sein. In diesem Ausführungsbeispiel werden lediglich in der Reihenfolge zuerst der erste Abschnitt, dann der zweite Abschnitt und zuletzt der dritte Abschnitt der Leitung durchlaufen. Dies bedeutet, dass die Abgase zunächst im Wesentlichen in Richtung Auslaß geführt werden, später im Wesentlichen in Richtung Einlaß, und damit in Gegenrichtung zurückgeführt werden und schließlich wieder im Wesentlichen in Richtung Auslaß geführt werden. Es findet daher eine Faltung des Abgasweges im Wesentlichen nach Art eines entarteten "Z" statt.

Vorteilhafterweise ist in dem ersten, zweiten oder dritten Abschnitt der Leitung der wenigstens eine Partikelfilter angeordnet. Dabei ist die Anordnung des wenigstens einen Partikelfilters in einem Leitungsabschnitt bevorzugt, in welchem die Abgase bereits auf eine hinreichen hohe Temperatur gebracht worden sind, so dass ein Volladen des Filters nicht mehr möglich ist bzw. der gesamte Filterprozess aufgrund der erhöhten Temperatur wesentlich effektiver ist.

Zur weiteren Verbesserung des Ergebnisses der Abgasnachbehandlung ist bevorzugt, dass in dem ersten, zweiten oder dritten Abschnitt ein weiterer Partikelfilter angeordnet ist. Das Vorsehen eines weiteren Partikelfilters erhöht die Effizienz der Filterung und vorzugsweise ist auch der weitere Partikelfilter in einem anderen Abschnitt als der Leitung als der wenigstens eine Partikelfilter angeordnet.

In baulicher Hinsicht, aber auch zur Reduzierung der Herstellungskosten ist bevorzugt, dass der wenigstens eine Partikelfilter und der weitere Partikelfilter einstückig als Filtermonolith ausgebildet sind. Falls der Filtermonolith entsprechende nicht miteinander verbundene Kanäle zur Führung der Abgase aufweist, kann durch entsprechende am einlaß- und/oder auslaßseitigen Ende des Filtermonolithen vorgesehene Dichtung(en) sichergestellt werden, dass auch in dem Filtermonolith die unterschiedlichen Leitungsabschnitte voneinander getrennt sind.

Ferner ist bevorzugt, dass zwischen dem ersten und dem zweiten Abschnitt und dem zweiten und dem dritten Abschnitt Bereiche der Leitung vorgesehen sind, in welchen die Strömungsrichtung der Abgase im Wesentlichen umgekehrt wird. Vorteilhafterweise ist in wenigstens einem der Bereiche ein Katalysator angeordnet. Neben dem eigentlichen Effekt eines Katalysators, nämlich demjenigen einer katalytischen Vorbehandlung, dient der Katalysator auch dazu, die Temperatur des Abgasstromes sowie der gesamten Anordnung zu erhöhen, was den Filterungsvorgang unterstützt und ein Volladen des Filters vermeidet. Durch die entsprechende Ausbildung des Abgasströmungspfades werden Möglichkeiten geschaffen, einen oder mehrere Katalysatoren in den Strömungspfad einzubauen. Dies kann derart geschehen, dass nach Durchlaufen des Katalysators die Abgase noch in der Anordnung verbleiben und sich somit die erhöhte Temperatur positiv auf die Gesamttemperatur der Anordnung auswirkt.

In baulicher Hinsicht ist bevorzugt, dass die ersten, zweiten und dritten Abschnitte der Leitung konzentrisch zueinander angeordnet sind. Eine praktisch bedeutsame Realisierung sieht dabei vor, dass einer der ersten, zweiten und dritten Abschnitte die Form eines Zylinders aufweist und die beiden anderen Abschnitte die Form eines Rohrs aufweisen. Hierdurch ergibt sich eine besonders kompakte Ausbildung der ersten, zweiten und dritten Leitungsabschnitte, da hierfür kein Bauraum verloren geht, und die aus den drei Leitungsabschnitten bestehende Anordnung insgesamt die Form eines Zylinders besitzt. Die zylindrische Form oder die Form als Rohr sind nicht wesentlich für die Erfindung. Das Funktionsprinzip gilt unverändert, wenn die Querschnitte der Filteranordnung nicht kreisförmig, sondern ellipsenförmig, oval, oder sonstwie konvex sind.

Ein besonders guter Wärmeaustausch zwischen den Abgasströmen der Anordnung ergibt sich dadurch, dass die ersten und zweiten Abschnitte und/oder die zweiten und dritten Abschnitte und/oder die ersten und dritten Abschnitte der Leitung durch eine gemeinsame Wandung getrennt sind.

Erfindungsgemäß weist die Partikelfilteranordnung ein Verteilungs- und Umlenkelement auf, welches einen ersten vom Einlaß kommenden Abgasstrom zum ersten Abschnitt der Leitung führt und einen vom zweiten Abschnitt der Leitung ankommenden zweiten Abgasstrom zum dritten Abschnitt der Leitung umlenkt. Das Verteilungs- und Umlenkelement weist daher eine doppelte Funktionalität auf. Es wird durch eine sternförmige Umlenkung realisiert, bei der sich die verschiedenen Abgasströme mehrfach überkreuzen, ohne dass diese sich vermischen. Die durch- oder überkreuzende Abgasführung bewirkt, dass sich das Verteilungs- und Umlenkelement erwärmt, und zwar auch abhängig von den eingesetzten Katalysatoren und dadurch als Wärmetauschelement dient. Dabei findet eine Vorverbrennung von Rußpartikeln statt, bevor diese in den eigentlichen Partikelfilter eintreten. Hierdurch verringert sich der Platzbedarf der Anordnung. Durch die Umlenkfunktionalität kann selbst ein vorgereinigtes Abgas noch einmal durch einen Partikelfilter geleitet werden, um weitere katalytische Behandlung und Filterfunktionen zu realisieren.

Ferner ist bevorzugt, dass das Verteilungs- und Umlenkelement zur Führung der ersten und zweiten Abgasströme jeweilige Kanäle aufweist, wobei wenigstens ein Teil der Außenwandung des Kanals des ersten Abgasstroms die Innenwandung des Kanals des zweiten Abgasstroms bildet.

Vorteilhafterweise weist die Partikelfilteranordnung in Richtung vom Einlaß zum Auslaß wenigstens folgende Abschnitte auf: einen ersten Abschnitt, welcher ein Verteilungs- und Umlenkelement für die Abgase aufweist; einen zweiten Abschnitt, welcher wenigstens einen Partikelfilter aufweist; und einen dritten Abschnitt, welcher ein Umlenkelement für die Abgase aufweist. In dieser Hinsicht ist die Gesamtpartikelfilteranordnung insoweit asymmetrisch, als dass der erste Abschnitt ein sowohl der Verteilung als auch der Umlenkung dienendes Element aufweist, während der dritte Abschnitt lediglich ein Umlenkelement aufweist.

Vorteilhafterweise sind die ersten, zweiten und dritten Abschnitte der Leitung im zweiten Abschnitt der Partikelfilteranordnung angeordnet.

Ferner ist bevorzugt, dass die Partikelfilteranordnung einen in Strömungsrichtung der Abgase unmittelbar hinter dem Einlaß und/oder vor dem ersten Abschnitt der Leitung angeordneten Katalysator aufweist.

Zur weiteren Erhöhung der Filterungseffizienz ist bevorzugt, dass die Partikelfilteranordnung einen in Strömungsrichtung der Abgase unmittelbar vor dem Auslaß und/oder im oder hinter dem zweiten oder dritten Abschnitt der Leitung angeordneten Feinstaubfilter aufweist.

Die Erfindung, sowie weitere Merkmale, Ziele, Vorteile und Anwendungsmöglichkeiten derselben, wird bzw. werden nachfolgend anhand einer Beschreibung von bevorzugten Ausführungsbeispielen unter Bezugnahme auf die beigefügten Zeichnungen näher erläutert. In den Zeichnungen bezeichnen dieselben Bezugszeichen dieselben bzw. entsprechende Elemente. In der vorliegenden Beschreibung wird der Ausdruck "Strömungsrichtung" der Abgase verwendet. Hierunter wird selbstverständlich die mittlere Strömungsrichtung der Abgase verstanden, wobei für einen Fachmann klar ist, dass einzelne Teilchen der Abgase in ihrer Bewegungsrichtung von der mittleren oder vornehmlichen Strömungsrichtung (in der Zeichnung durch Pfeile angezeigt) abweichen können. Die Ausdrücke "vor" und "hinter" und dergleichen werden verwendet, um relative Anordnungen in Bezug auf die Hauptströmungsrichtung, die generell vom Einlaß zum Auslaß hin ist, anzugeben. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbeziehung. In den Zeichnungen zeigen:
- Fig. 1a: eine schematische Darstellung im Längsschnitt zur Erläuterung eines ersten Ausführungsbeispiels einer erfindungsgemäßen Partikelfilteranordnung;
- Fig. 1b: eine schematische Darstellung im Längsschnitt eines Teils der Fig. 1a in weiterer Einzelheit zur näheren Erläuterung der erfindungsgemäßen Partikelfilteranordnung gemäß dem ersten Ausfiihrungsbeispiel;
- Fig. 1c: eine schematische Darstellung in einer Draufsicht auf den in Fig. 1b dargestellten Teil in weiterer Einzelheit zur näheren Erläuterung der erfindungsgemäßen Partikelfilteranordnung gemäß dem ersten Ausführungsbeispiel;
- Fig. 2a: eine schematische Darstellung im Längsschnitt zur Erläuterung eines zweiten Ausführungsbeispiels einer erfindungsgemäßen Partikelfilteranordnung;
- Fig. 2b: eine schematische Darstellung im Längsschnitt eines Teils der Fig. 2a in weiterer Einzelheit zur näheren Erläuterung der erfindungsgemäßen Partikelfilteranordnung gemäß dem zweiten Ausführungsbeispiel; und
- Fig. 2c: eine schematische Darstellung in einer Draufsicht auf den in Fig. 2b dargestellten Teil in weiterer Einzelheit zur näheren Erläuterung der erfindungsgemäßen Partikelfilteranordnung gemäß dem zweiten Ausführungsbeispiel.

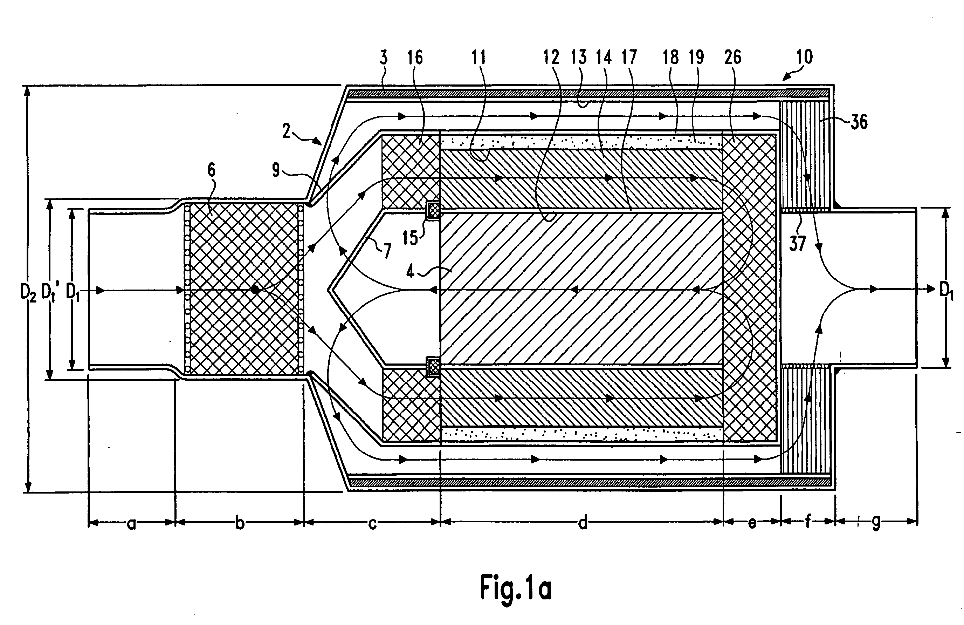

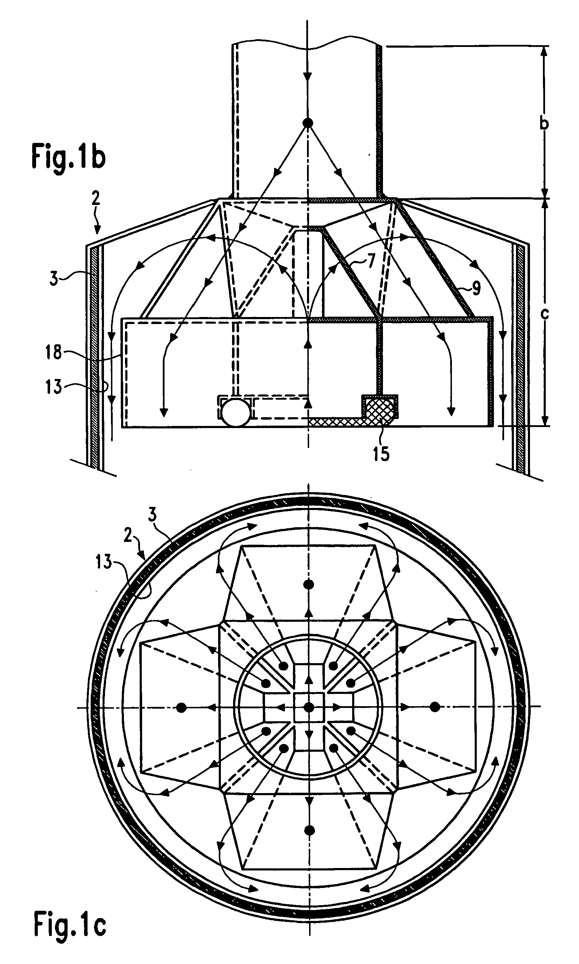

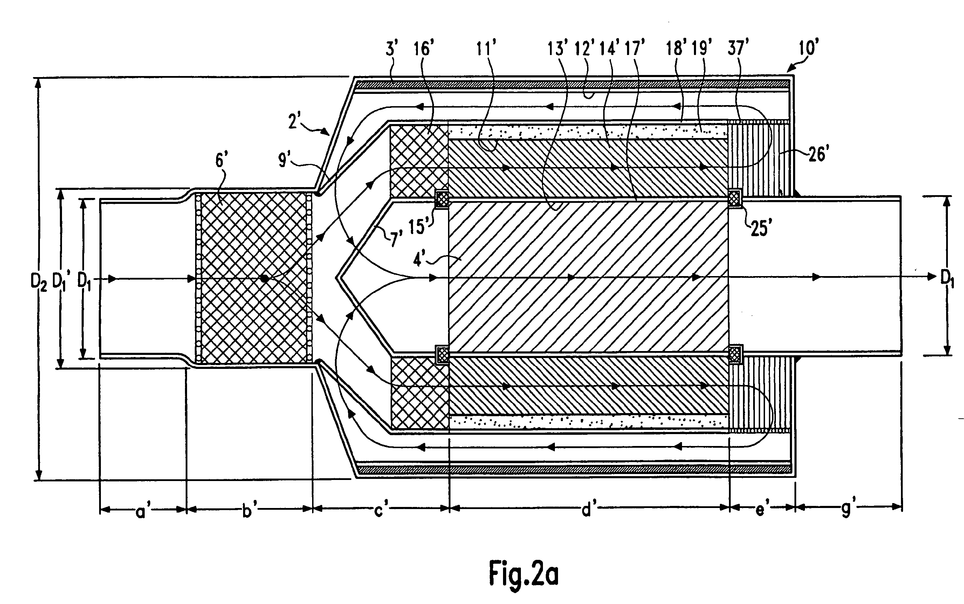

Unter Bezugnahme auf die Schnittansichten der Fig. 1a bis 1c wird im Folgenden ein erstes Ausführungsbeispiel einer erfindungsgemäßen Partikelfilteranordnung 10 im Hinblick auf dessen Aufbau und Funktion näher erläutert. Die Fig. 1a zeigt in einer stark schematischen Darstellung eine Längsschnittsansicht der erfindungsgemäßen Partikelfilteranordnung 10. Die erfindungsgemäße Partikelfilteranordnung 10 weist in Hauptströmungsrichtung der Abgase (in Richtung vom Einlaß zum Auslaß, d.h. in den Fig. 1a und 2a von links nach rechts) einen Einlaßabschnitt a, einen Filtervorbauabschnitt b, einen vorderen Umlenkabschnitt oder ersten Abschnitt c (in Fig. 1a nur sehr schematisch angedeutet), einen Filterabschnitt oder zweiten Abschnitt d, einen hinteren Umlenkabschnitt oder dritten Abschnitt e, einen Filternachbauabschnitt f und einen Auslaßabschnitt g, die alle in einem gemeinsamen Gehäuse 2 ausgebildet sind, auf. Die Partikelfilteranordnung 10 ist über den Einlaßabschnitt a beispielsweise mit einem (nicht dargestellten) Motor eines Kraftfahrzeugs verbunden, von welchem insbesondere Rußpartikel enthaltende Abgase über (nicht dargestellte) Leitungen dem Einlaßabschnitt a der Partikelfilteranordnung 10 zugeführt werden. Über den Auslaßabschnitt a ist die Partikelfilteranordnung 10 mit einem (nicht dargestellten) Auspuff verbunden. Selbstverständlich können zwischen dem Motor und dem Einlaßabschnitt a verschiedene weitere Komponenten, wie z.B. ein Katalysator, vorgesehen sein. Ebenso können zwischen dem Auslaßabschnitt g der Partikelfilteranordnung 10 und dem Auspuff verschiedene weitere Komponenten, z.B. ein Vergaser, angeordnet sein. Die erfindungsgemäße Partikelfilteranordnung 10 wird daher in das Abgassystem an einer geeigneten Stelle beispielsweise durch eine Schweiß- oder eine Flanschverbindung eingesetzt und befestigt und dient zur Reinigung der Abgase, um geforderte Grenzwerte für den Reinheitsgrad der Abgase einzuhalten bzw. sogar zu unterschreiten. Die Partikelfilteranordnung 10 ist im Allgemeinen symmetrisch zu einer (nicht eingezeichneten) Mittellängsachse ausgebildet. Der Einlaßabschnitt a weist einen rohrförmigen Querschnitt mit Außendurchmesser D₁ auf. Der in Strömungsrichtung der Abgase unmittelbar hinter dem Einlaßabschnitt a angeordnete Filtervorbauabschnitt b weist ebenfalls vorzugsweise einen rohrförmigen Querschnitt mit einem im Außendurchmesser etwas erweiterten Außendurchmesser D_{1'} > D₁ auf. Der sich in Strömungsrichtung der Abgase dem Filtervorbauabschnitt b unmittelbar anschließende vordere Umlenkabschnitt Abschnitt c erweitert sich zunächst vom Außendurchmesser D_{1'} zu einem über die weitere Länge des Abschnitts c konstanten Außendurchmesser D₂. Über den Bereich der Partikelfilteranordnung 10 mit konstantem Außendurchmesser D₂ weist das Gehäuse 2 innerhalb davon eine thermische Isolierung 3 auf. Der Filterabschnitt d, der hintere Umlenkabschnitt e und der Filternachbauabschnitt f weisen den konstanten Außendurchmesser D₂ auf. Zwischen dem Filternachbauabschnitt f und dem Auslaßabschnitt g ist eine Stufe ausgebildet, so dass der Auslaßabschnitt g wieder den Außendurchmesser D₁ besitzt. Der innere Aufbau des vorderen Umlenkabschnitts c ist der besseren Übersichtlichkeit halber in Fig. 1a nur angedeutet und genauer in den Fig. 1b und 1c dargestellt. Der vordere Umlenkabschnitt c besitzt die Funktion, die vom Einlaßabschnitt a und dem Filtervorbauabschnitt b her ankommenden Abgase an entsprechende Bereiche, genauer an einen radial zur Mitte versetzten Bereich, des Filterabschnitts d weiterzuleiten bzw. zu verteilen. Darüber hinaus besitzt der vordere Umlenkabschnitt c die Funktion aus bestimmten Bereichen, genauer von einem zentralen Bereich, des Filterabschnitts d in Gegenrichtung strömenden, d.h. sozusagen zurückströmenden (ohne Durchmischung mit den neu angelieferten Abgasen), Abgase in ihrer Richtung um in etwa 180 Grad umzukehren, d.h. derart umzulenken, dass sie wieder in der Hauptströmungsrichtung vom Einlaßabschnitt a zum Auslaßabschnitt g hin strömen, und diese erneut, allerdings in einem radial ganz außen liegenden Bereich, in den Filterabschnitt d der erfindungsgemäßen Partikelfilteranordnung 10 einzuführen. Aufgrund dieser Funktionalitäten des ersten Abschnitts c der erfindungsgemäßen Partikelfilteranordnung 10 kann dieser auch als vorderer Verteilungs- und Umlenkabschnitt c bezeichnet werden. Die vornehmliche Funktion des Filterabschnitts oder zweiten Abschnitts d der erfindungsgemäßen Partikelfilteranordnung 10 besteht in der Filterung der Abgase. Der dritte oder hintere Umlenkabschnitt e dient zur Verteilung der von einem radial versetzten ringförmigen Bereich angelieferten Abgasströme in einen inneren zylindrischen Bereich des Filterabschnitts d, wobei die Strömungsrichtung um etwa 180 Grad umgekehrt wird. Dabei findet auch eine katalytische Behandlung der Abgase statt. Der Filternachbauabschnitt f sorgt für eine Umlenkung der Abgase um zwei Mal 90 Grad aus dem radial äußeren Bereich zurück in den zentralen Bereich des Filterauslaßabschnitts g, und zwar unter effektiver Beibehaltung der Hauptströmungsrichtung vom Einlaß zum Auslaß, wobei hier ebenfalls eine katalytische Behandlung in einem zu der Mittelachse in etwa senkrecht verlaufenden Führungsabschnitt für die Abgase vorgesehen wird.

Im Folgenden wird nun in weiterer Einzelheit der Aufbau der erfindungsgemäßen Partikelfilteranordnung 10 in weiterer Einzelheit näher erläutert. Im Filtervorbauabschnitt b mit dem Außendurchmesser D₁' ist ein Katalysator 6 angeordnet, welcher auch als erster Vorkatalysator bezeichnet werden kann, da er der eigentlichen Filterung vorgeschaltet ist. Der Filterabschnitt d ist im Wesentlichen symmetrisch zur Mittellängsachse der Partikelfilteranordnung 10 ausgebildet und weist einen zentralen zylinderförmigen Partikelfilter 4 auf. Lediglich in einem Ausführungsbeispiel erstreckt sich der Partikelfilter in radialer Richtung von der Mittelachse bis zu etwa ein Drittel des halben Außendurchmessers D₂ und in longitudinaler Richtung in etwa über die Hälfte der Länge des durch die Abschnitte c, d, e und f gebildeten Teils der Partikelfilteranordnung 10. Um den zylinderförmigen Partikelfilter 4 herum ist ein ringförmiger Partikelfilter 14 angeordnet, wobei beide Partikelfilter 4, 14 durch eine gemeinsame ringförmige Wandung 17 getrennt sind. Beide Partikelfilter 4 und 14 sind vorzugsweise Siliziumkarbid (SiC)-Partikelfilter. Lediglich in einem Ausführungsbeispiel besitzt der ringförmige Partikelfilter eine Dicke, welche in etwa einem Drittel des halben Außendurchmesser D₂ des zweiten Filterabschnitts 2 entspricht. Die bevorzugte praktische Realisierung des zylinderförmigen Partikelfilters 4 und des ringförmigen Partikelfilters 14 erfolgt dabei bevorzugt durch einen Monolithen, welcher zur Filterung eine Vielzahl von sich in Längsrichtung erstreckenden und nicht untereinander verbundenen Kanälen aufweist, wobei durch eine an der dem Einlaßabschnitt a zugewandten Ende an der kreisförmigen Grenzlinie zwischen den Filtern 4, 14 vorgesehene Dichtung 15 eine funktionale Trennung des Monolithen in die beiden Filter(abschnitte) 4, 14 vorgesehen wird. Die gemeinsame Wandung 17 wird dabei durch die Vielzahl von außen liegenden Wänden der äußersten Kanäle des Filters 4 gebildet. Radial außerhalb des Partikelfilters 14 ist ein ringförmiger Kanal ausgebildet, der nach innen von einer Außenwand 18 des Filters 14 mit innerhalb davon ausgebildeter Dichtung und/oder thermischer Isolierung 19 und nach außen von einer Innenwand des Gehäuses 2 im Bereich der Abschnitte c, d, e und f begrenzt wird. In diesem Kanal ist kein der Abgasbehandlung dienendes Element angeordnet, da dieser Kanal dem Transport des Abgasstroms in Richtung vom Einlaß zum Auslaß hin dient. Vornehmlich dient dieser Kanal der thermischen Kapselung der Filteranordnung; er verhindert also, dass Prozeßwärme der inneren Leitungsabschnitte verloren geht. Dadurch wird ein wichtiges Funktionsprinzip des Filters, nämlich seine überlegene Arbeitstemperatur, ermöglicht. Zwischen dem Filtervorbauabschnitt b und dem Filterabschnitt d ist der Umlenkabschnitt c angeordnet, welcher im Ausführungsbeispiel vier Kanäle aufweist, um vom Filtervorbauabschnitt b ankommende Abgase durch einen ringförmigen zweiten Vorkatalysator 16 in den äußeren Partikelfilter 14 zu lenken. In Fig. 1a sind zwei Kanäle erkennbar, die durch die Innenwand 7 und die Außenwand 9 gebildet werden. Der zweite Vorkatalysator 16 besitzt dabei im wesentlichen den gleichen Innendurchmesser wie der Partikelfilter 14. Der Außendurchmesser der Vorkatalysators 16 entspricht dabei ebenfalls im Wesentlichen demjenigen des Partikelfilters 14, und genauer demjenigen der Wandung 18, die um den Partikelfilter 14 herum angeordnet ist. Ferner weist die Partikelfilteranordnung einen dritten zylinderförmigen (Vor-)Katalysator 26 an einem dem Auslaß zugewandten Ende des Filterabschnitts d, und genauer im hinteren Umlenkabschnitt e, auf, dessen Außendurchmesser in etwa demjenigen des Partikelfilters 14 bzw. der Wandung 18 (und damit auch demjenigen des zweiten Vorkatalysators 16) entspricht. Neben der eigentlichen Katalysatorfunktion wird dieser ringförmige Katalysator zur Umlenkung der Abgasströmung um etwa 180 Grad vom äußeren Partikelfilter 14 in den zentralen Partikelfilter 4 verwendet. Erfindungsgemäß werden die Abgase in dem Filterabschnitt d in unterschiedlichen Richtungen innerhalb der Partikelfilteranordnung 10 geführt. Genauer ist in der Partikelfilteranordnung 10 eine Leitung ausgebildet, die im Filterabschnitt d der Partikelfilteranordnung 10 drei Abschnitte aufweist. Diese Abgasleitung weist im Partikelfilter 14 einen ersten (Leitungs-)Abschnitt 11 auf, in welchem die Abgase in der Richtung vom Einlaß zum Auslaß hin (in der Zeichnung von links nach rechts) strömen. Ferner weist die Abgasleitung im zentralen Partikelfilter 4 einen zweiten (Leitungs-)Abschnitt 12 auf, in welchem die Abgase im Wesentlichen in der Richtung vom Auslaß zum Einlaß hin strömen. Ganz außen weist die Leitung einen dritten (Leitungs-)Abschnitt 13, wobei der dritte Leitungsabschnitt 13 dem radial außen vorgesehenen ringförmigen Kanal entspricht, und in welchem die Strömungsrichtung der Abgase wieder vom Einlaß zum Auslaß hin ist. Die ersten, zweiten und dritten Leitungsabschnitte werden in dieser Reihenfolge vom Abgasstrom durchlaufen. Gemäß der Terminologie der vorliegenden Anmeldung fallen die vorderen und hinteren Enden der Leitungsabschnitte 11, 12 und 13 mit denjenigen des Filterabschnitts d zusammen. Hinter dem hinteren Umlenkabschnitt e ist der Filternachbauabschnitt f vorgesehen, welcher einen ringförmigen Nachkatalysator 36 aufweist, dessen Innendurchmesser demjenigen des Partikelfilters 14 entspricht und dessen Außendurchmesser demjenigen des dritten Leitungsabschnitts oder Kanals 13 entspricht. Da der Katalysator 36 der eigentlichen Filterung nachgeschaltet ist, wird dieser als Nachkatalysator bezeichnet. Durch den Nachkatalysator 36 und ein entlang seinem Innenumfang angebrachtes, ringförmiges Lochblech 37 werden die Abgase in den Auslaßabschnitt g gelenkt, in dem sie entlang der Mittelachse zentral aus der Partikelfilteranordnung 10 austreten. Genauer werden die Abgase beim Eintritt in den Nachkatalysator 36 um in etwa 90 Grad umgelenkt und beim Austritt aus dem Nachkatalysator 36 erneut um in etwa 90 Grad umgelenkt. Dem Nachkatalysator 36 kann optional ein (nicht dargestellter) Feinstaubfilter nachgeschaltet sein, welcher sowohl im Filternachbauabschnitt f angeordnet ist, aber darüber hinaus auch in den rohrförmigen Auslaßabschnitt g ragen kann.

Die durch den Einlaßabschnitt a und dem Filtervorbauabschnitt b strömenden und vom Katalysator 6 vorbehandelten Abgase werden durch den Umlenkabschnitt c der erfindungsgemäßen Partikelfilteranordnung 10 durch den zweiten Vorkatalysator 16 in den ersten Leitungsabschnitt 11 verteilt, in welchem sie durch den Partikelfilter 14 gefiltert werden. Nach Durchströmen des ersten Leitungsabschnitts 11 werden die Abgase durch den Katalysator 26, welcher sich über die auslaßseitigen Enden der ersten und zweiten Leitungsabschnitte 11, 12 erstreckt, nicht nur katalysiert, sondern auch um etwa 180 Grad umgelenkt, so dass nach Durchlaufen des ersten Leitungsabschnitts 11 und des Katalysators 26 die Abgase im Leitungsabschnitt 12 der Partikelfilteranordnung 10 wieder in Richtung Einlaßabschnitt a aufgrund der Umlenkung des Katalysators 26 zurückströmen und darin durch den Hauptpartikelfilter 4 gefiltert werden. Die im zweiten Leitungsabschnitt 12 zurückströmenden Abgase gelangen daher erneut in den Umlenkabschnitt c der Partikelfilteranordnung 10, in welchem sie wieder um etwa 180 Grad umgelenkt werden, und zwar derart, dass keine Vermischung mit den vom Einlaßabschnitt a ankommenden Abgasströmen erfolgt. Dabei werden die vom zweiten Leitungsabschnitt 12 ankommenden Abgasströme in den radial außen angeordneten dritten Leitungsabschnitt 13 geführt. Im dritten Leitungsabschnitt 13 strömen die Abgase erneut in Richtung vom Einlaß zum Auslaß hin. Nach Durchlaufen des dritten Leitungsabschnitts 13 werden die Abgase durch den Nachkatalysator 36 nachbehandelt, bevor sie über den Auslaßabschnitt g in Richtung Auspuff austreten.

Die Abgase treten daher durch den Einlaßabschnitt a in die Partikelfilteranordnung 10 ein und werden durch die Vorkatalysatoren 6, 16 vorbehandelt. Gemäß einem im Stand der Technik bekannten Effekt sorgen die Vorkatalysatoren 6, 16 bereits für eine Temperaturerhöhung der Abgase. Diese werden während der Durchströmung des Umlenkelements in Filterabschnitt c zusätzlich erwärmt, so dass sie beim Eintritt in den ersten Leitungsabschnitt 11 der Partikelfilteranordnung 10 eine erhöhte Temperatur aufweisen. In diesem Abschnitt sorgt der Partikelfilter 14 für eine Filterung der Abgase vornehmlich im Hinblick auf Ruß. Wie eingangs erläutert wurde ist durch die erhöhte Temperatur der Abgase die Filterung wesentlich effektiver. Nach dem Durchlaufen des ersten Leitungsabschnitts 11 werden die Abgase durch den Katalysator 26 in ihrer Strömungsrichtung um 180 Grad in den zentral angeordneten zweiten Leitungsabschnitt 12 umgelenkt. Der an der hinteren Stirnseite der beiden Leitungsabschnitte 11 und 12 angeordnete Katalysator 26 sorgt dabei nicht nur für eine Umkehr der Strömungsrichtung und für die Weiterleitung vom ersten Leitungsabschnitt 11 in den zweiten Leitungsabschnitt 12, sondern es findet -entsprechend den Katalysatoren 6, 16- eine weitere Temperaturerhöhung der Abgase statt. Im zweiten Leitungsabschnitt 12 strömen die Abgase aus dem Filterabschnitt d der Partikelfilteranordnung 10 in den Umlenkabschnitt c zurück. In der Partikelfilteranordnung 10 werden nun die von dem zweiten Leitungsabschnitt 12 angelieferten endgefilterten Abgase, ohne dass eine Vermischung mit den vom Einlaßabschnitt a ankommenden Abgasen stattfindet, unter erneuter Umkehr der Strömungsrichtung in den äußersten Bereich des Filterabschnitts d der Partikelfilteranordnung 10, und genauer in den dritten Leitungsabschnitt 13, in welchem kein Abgasnachbehandlungsmittel vorgesehen ist, geleitet. Nach Durchströmen des Nachkatalysators 36 treten die Abgase aus dem Auslaßabschnitt g in Richtung des Auspuffs aus. Bei dem in den Fig. 1a bis 1c dargestellten ersten Ausführungsbeispiel einer erfindungsgemäßen Partikelfilteranordnung 10 findet daher eine zweifache Umlenkung der Abgase um in etwa 180 Grad statt. Diese doppelte Umlenkung sorgt zum Einen dafür, dass die Abgase beim Austritt aus der erfindungsgemäßen Partikelfilteranordnung 10 wieder in der ursprünglichen Strömungsrichtung vom Einlaßabschnitt a zum Auslaßabschnitt g hin strömen. Eine Aufheizung der Abgase findet insbesondere an den Katalysatoren 6, 16 und 26 statt. Aufgrund des Gegenstromeffekts (die ersten, zweiten und dritten Leitungsabschnitte 11, 12 und 13 sind jeweils durch eine gemeinsame Wandung miteinander in Wärmekontakt) findet daher eine Aufheizung der kälteren Gasströme durch den Wärmeaustausch mit in der Anordnung, insbesondere durch die vorgesehenen Katalysatoren, bereits aufgeheizten Abgase statt. Insbesondere auch durch die im Umlenkabschnitt c der erfindungsgemäßen Partikelfilteranordnung 10 vorgesehene Umlenkung der aus dem Filterabschnitt d, und genauer aus dem Leitungsabschnitt 12, austretenden und in den dritten Leitungsabschnitt 13 des zweiten Filterabschnitts 2 erneut eintretenden Abgasströme werden die unmittelbar vom Einlaßabschnitt a ankommenden Abgasströme beim Durchströmen der Abschnitte b und c der Filteranordnung derart aufgeheizt, dass sie beim Eintritt in den Leitungsabschnitt 11 und damit in den Filterabschnitt d eine wesentliche höhere Temperatur besitzen, so dass ein Volladen der Partikelfilter 4 und 14 weitgehend vermieden werden kann und der gesamte Filterprozeß somit wesentlich effizienter wird. Die gesamte Partikelfilteranordnung 10 wird durch die erfindungsgemäße Ausbildung auch in wesentlich kürzerer Zeit auf eine entsprechend hohe Temperatur gebracht. Durch Experimente wurde herausgefunden, dass die sich in den Partikelfiltern 4 und 14 einstellende Temperatur zur nahezu vollständigen Verpuffung bzw. Regeneration der Rußpartikel ausreicht. Insbesondere befinden sich die Abgase, abhängig von der jeweiligen Ausgangstemperatur, welche nicht zuletzt durch die Art des Motors bestimmt wird, bereits vor dem Eintritt in die Partikelfilter 4 und 14 auf einer derart hohen Temperatur, dass nahezu keine Rußpartikel mehr in den Abgasen enthalten sind. Die erfindungsgemäß erreichte Temperaturerhöhung ist auch so groß, dass ein Feinstaubfilter unter Umständen weggelassen werden kann.

Anhand der Fig. 1b und 1c wird der innere Aufbau des Umlenkabschnitts c der Partikelfilteranordnung 10 in weiterer Einzelheit erläutert. Hierzu sei bemerkt, dass verschiedene in Fig. 1a dargestellte Bauteile der besseren Übersichtlichkeit halber weggelassen wurden. Dies gilt insbesondere für die beiden Vorkatalysatoren 6 und 16. Man entnimmt einer Zusammenschau der Fig. 1b und 1c, dass insgesamt vier Kanäle mit Innenwandung 7 und Außenwandung 9, die sternförmig symmetrisch zu der Mittelachse angeordnet sind, und zwar um einen Winkel von etwa 90 Grad zueinander versetzt, welche die aus dem Filtervorbauabschnitt b angelieferten Abgase in den ringförmigen Raum, in welchem der Vorkatalysator 16 angeordnet ist, anliefern. Ferner entnimmt man den Fig. 1b und 1c, dass die aus dem zweiten Leitungsabschnitt 12, in welchem der Partikelfilter 4 angeordnet ist, in den Umlenkabschnitt c erneut eintretenden Abgasströme in zu den vorerwähnten Kanälen, gebildet durch die Innenwand 7 und die Außenwand 9, versetzt angeordneten Kanälen um etwa 180 Grad umgelenkt und in den radial außen liegenden dritten Leitungsabschnitt 13 der Filteranordnung d eintreten. Aufgrund der versetzen Anordnung der der Abgashinfiihrung und -rückführung dienenden Kanäle kann der innere Teil (mit Ausnahme des Außengehäuses 2) der Partikelfilteranordnung 10 auch als "Stern" bezeichnet werden. Der vordere Umlenkabschnitt c besitzt daher eine Umlenk- und Verteilungsfunktionalität. Er dient zunächst dazu, den ankommenden Abgasstrom in einen um die Mittelachse der Anordnung angeordneten ringförmigen Bereich (den ersten Leitungsabschnitt 11 mit darin angeordnetem Partikelfilter 14) zu verteilen bzw. umzulenken oder in seiner Richtung zu ändern. Ferner dient der Umlenkabschnitt c dazu, aus dem zentralen Bereich der Anordnung (nämlich dem zweiten Leitungsabschnitt 12 mit darin angeordnetem Partikelfilter 4) angelieferte Abgasströme in den radial äußeren Kanal mit darin ausgebildeten Leitungsabschnitt 13 ohne ein der Abgasnachbehandlung dienendes Element zu verteilen bzw. hierzu auch um etwa 180 Grad umzulenken bzw. umzukehren.

Anhand der Fig. 2a bis 2c wird im Folgenden ein zweites Ausführungsbeispiel der erfindungsgemäßen Partikelfilteranordnung 10' näher erläutert. Das in den Fig. 2a bis 2c dargestellte zweite Ausführungsbeispiel der erfindungsgemäßen Partikelfilteranordnung 10' ist im Allgemeinen ähnlich zu dem bereits in Verbindung mit den Fig. 1a bis 1c beschriebenen ersten Ausfiihrungsbeispiel. Im Folgenden wird daher lediglich auf die Unterschiede zu dem bereits beschriebenen ersten Ausführungsbeispiel eingegangen. Die Partikelfilteranordnung 10' gemäß dem zweiten Ausführungsbeispiel weist keinen Filternachbauabschnitt f auf. Der Auslaßabschnitt g' schließt unmittelbar an den hinteren Umlenkabschnitt e' an. Der Katalysator 26' der Partikelfilteranordnung 10' ist im Unterschied zum Katalysator 26 der Partikelfilteranordnung 10 ringförmig und symmetrisch zur Mittelachse der Partikelfilteranordnung 10' ausgebildet. Der Innendurchmesser des Katalysators 26' entspricht D₁ und der Außendurchmesser des ringförmigen Katalysators 26' entspricht in etwa demjenigen des Partikelfilters 14'. Genauer entspricht die Größe und Anordnung eines entlang dem Außenumfang des Katalysators 26' verlaufenden Lochblechs 37' der äußeren Wandung 18' des Partikelfilters 14'. Der Katalysator 26' ist nach innen durch eine verlängerte Gehäusewandung des Auslaßabschnitts g' gegenüber diesem abgedichtet. Zu diesem Zweck ist ferner eine der Dichtung 15' gegenüberliegende Dichtung 25' am auslaßseitigen Ende des Partikelfilters 4' vorgesehen. Diese baulichen Unterschiede sorgen für einen anderen Strömungsverlauf der Abgase in der Partikelfilteranordnung 10' des zweiten Ausführungsbeispiels im Vergleich zu der Partikelfilteranordnung 10 des ersten Ausführungsbeispiels. Der Verlauf der Abgasströmung erfolgt zunächst wie bei dem eingangs erläuterten ersten Ausführungsbeispiel. Nach Eintritt der Abgase durch den Einlaßabschnitt a' und den Filtervorbauabschnitt b' werden die Abgase von dem Umlenkelement im Abschnitt c', in welchem der Katalysator 16' angeordnet ist, in den ersten Leitungsabschnitt 11' geleitet, welcher einen Teil des Filterabschnitts d' bildet, und in dem der Partikelfilter 14' angeordnet ist. Unmittelbar nach Austritt aus dem Leitungsabschnitt 11' treten die Abgase in den Katalysator 26' ein und werden dann, im Unterschied zu dem eingangs erläuterten ersten Ausführungsbeispiel, nach außen in einen ringförmigen, radial außen vorgesehenen Kanal umgelenkt. In diesem äußeren Kanal strömen die Abgase in Gegenrichtung, d.h. vom Auslaß zum Einlaß hin, was sich Fig. 2a bis c deutlich durch die durch Pfeile angezeigte Abgasströmung entnehmen lässt. Der zweite Leitungsabschnitt 12', welcher dem Bereich des äußeren radialen Kanals im Bereich des Filterabschnitts d' entspricht, ist daher bei dieser Ausführungsform ganz außen angeordnet. Vom Filterabschnitt d' treten die Abgase erneut in den Umlenkabschnitt c' ein, und zwar ohne dass eine Vermischung mit den vom Filtervorbauabschnitt b' neu angelieferten Abgasströmen stattfindet. Obwohl keine Vermischung der Abgasströme stattfindet, tritt allerdings im Umlenkabschnitt c' ebenfalls wie beim ersten Ausführungsbeispiel ein Wärmetauscheffekt auf, da die aus dem Filterabschnitt d' angelieferten Abgase durch das Durchlaufen der Katalysatoren 16' und 26' sich auf wesentlich höherer Temperatur befinden, und zwar verglichen mit den aus dem Vorkatalysator 6' des Filtervorbausabschnitt b' in den Umlenkabschnitt c' eintretenden Abgasströmen. Über gemeinsame Wandungen der ansonsten getrennten Kanäle wird ein Wärmeaustausch, d.h. ein Aufheizen der in den Katalysator 16' eintretenden Abgasströme bzw. auch der umliegenden Bauelemente bzw. Komponenten erreicht, was den Filtervorgang effizienter macht und insbesondere auch ein Volladen des Filters vermeidet. Durch das Umlenkelement im Abschnitt c' werden die Abgasströme von dem zweiten Leitungsabschnitt 12' in den bei dieser Ausführungsform zentral angeordneten dritten Leitungsabschnitt 13' geleitet, in welchem sich der Partikelfilter 4' befindet. Die Abgasströme befinden sich bereits vor Eintritt in den Partikelfilter 4' in der gewünschten Austrittsrichtung, d.h. in Richtung vom Einlaß zum Auslaß hin. Nach Durchlaufen des Partikelfilters 4' treten die Abgase durch das sich über die Abschnitte e' und g' erstreckende Auslaßrohr mit Außendurchmesser D₁ aus der Partikelfilteranordnung 10' aus.

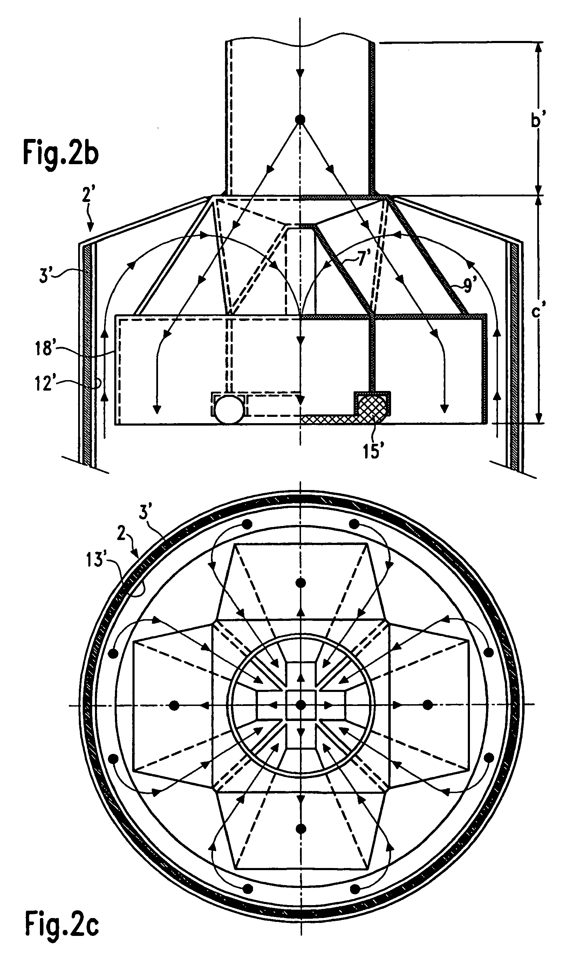

In den schematischen Darstellungen der Fig. 2b und 2c ist der Umlenkabschnitt c' der Partikelfilteranordnung 10' des zweiten Ausführungsbeispiels in weiterer Einzelheit dargestellt. Grundsätzlich entspricht dieser Aufbau demjenigen des bereits in Verbindung mit den Fig. 1b und 1c beschriebenen Aufbau des Umlenkelements im Abschnitt c der Partikelfilteranordnung 10 des ersten Ausführungsbeispiels. Hiervon unterscheidet sich jedoch die Strömungsrichtung des um 180 Grad umzukehrenden Abgasstroms, welcher im zweiten Ausführungsbeispiel von dem zweiten Leitungsabschnitt 12', der hier im äußeren Kanal ausgebildet ist, und in den zentralen Bereich mit darin angeordnetem Partikelfilter 4' umgelenkt wird. Dies ist auch gut der Darstellung der entsprechenden Pfeile in den Fig. 2b und 2c entnehmbar. In baulicher Hinsicht unterscheiden sich die beiden Ausführungsbeispiele der Partikelfilteranordnung 10, 10' lediglich in Bezug auf die Ausbildung des auslaßseitigen Endes, insbesondere in Bezug auf das hintere Umlenkelement e', wobei die hierdurch geänderte Abgasführung zwar die Strömung der Abgase auch am einlaßseitigen Ende, insbesondere in Bezug auf das vordere Umlenkelement c', in der Anordnung ändert, aber im Wesentlichen keine baulichen Anpassungen erfordert.

Die Erfindung wurde vorstehend anhand von bevorzugten Ausführungsformen derselben näher erläutert. Für einen Fachmann ist es jedoch offensichtlich, dass unterschiedliche Abwandlungen und Modifikationen gemacht werden können, ohne von dem der Erfindung zugrunde liegenden Gedanken abzuweichen. Bei den anhand der beigefügten Zeichnungen erläuterten Ausführungsbeispielen wurde besonders auf die vorteilhafte Verwendung der erfindungsgemäßen Partikelfilteranordnung in Verbindung mit mittels Dieselkraftstoff betriebenen Kraftfahrzeugen, insbesondere Pkw's, Lkw's oder Busse, eingegangen. Die vorliegende Erfindung ist jedoch nicht auf das Anwendungsgebiet in Fahrzeugen beschränkt. Vielmehr kann die vorliegende Erfindung vorteilhafterweise in jeder Art von Anlage verwendet werden, die Abgase bzw. Rauchgase aufweist, welche entsprechend nachbehandelt werden sollen. Beispiele von derartigen Anlagen umfassen jegliche Art von Anlagen, welche zur Wandlung von Primärenergie, z.B. fossile Brennstoffe, in Nutzenergie, z.B. Strom, Wärme oder mechanische Energie, vorgesehen sind, z.B. Kraftwerke, sowie sonstige Haus- und Industrieanlagen.

## Patentansprüche

1. Partikelfilteranordnung (10, 10') zum Filtern von Abgasen einer Brennkraftmaschine oder - anlage, insbesondere einer Dieselbrennkraftmaschine, mit einem Einlaß und einem Auslaß, wobei im Strömungspfad der Abgase zwischen Einlaß und Auslaß wenigstens ein Partikelfilter (4) angeordnet ist, wobei die Abgase in einer Leitung geführt werden, wobei die Leitung einen ersten Abschnitt (11; 11') aufweist, in welchem die Abgase im Wesentlichen in Richtung Auslaß geführt werden, wobei die Leitung ferner einen zweiten Abschnitt (12; 12') aufweist, in welchem die Abgase im Wesentlichen in Richtung Einlaß geführt werden, wobei die Leitung ferner einen dritten Abschnitt (13; 13') aufweist, in welchem die Abgase im Wesentlichen in Richtung Auslaß geführt werden, wobei die Partikelfilteranordnung (10, 10') ein Verteilungs- und Umlenkelement aufweist, welches einen ersten vom Einlaß kommenden Abgasstrom zum ersten Abschnitt (11; 11') der Leitung führt und einen vom zweiten Abschnitt der Leitung (12; 12') ankommenden zweiten Abgasstrom zum dritten Abschnitt (13; 13') der Leitung umlenkt, und wobei das Verteilungs- und Umlenkelement eine sternförmige Umlenkung realisiert, bei der sich verschiedene Abgasströme mehrfach überkreuzen, ohne dass diese sich vermischen.

2. Partikelfilteranordnung (10, 10') nach Anspruch 1, **dadurch gekennzeichnet dass** die Abgase den ersten, zweiten und dritten Abschnitt (11, 12, 13; 11', 12', 13') der Leitung nacheinander durchströmen.

3. Partikelfilteranordnung (10, 10') nach Anspruch 1 oder 2, **dadurch gekennzeichnet, dass** in dem ersten, zweiten oder dritten Abschnitt (11, 12, 13; 11', 12', 13') der Leitung der wenigstens eine Partikelfilter (4) angeordnet ist.

4. Partikelfilteranordnung (10, 10') nach einem der Ansprüche 1 bis 3, **dadurch gekennzeichnet, dass** in dem ersten, zweiten oder dritten Abschnitt (11, 12, 13; 11', 12', 13') ein weiterer Partikelfilter (14) angeordnet ist.

5. Partikelfilteranordnung (10, 10') nach Anspruch 3 oder 4, **dadurch gekennzeichnet dass** der wenigstens eine Partikelfilter (4) und der weitere Partikelfilter (14) einstückig als Filtermonolith ausgebildet sind.

6. Partikelfilteranordnung (10, 10') nach einem der Ansprüche 1 bis 5, **dadurch gekennzeichnet, dass** zwischen dem ersten und dem zweiten Abschnitt (11, 12; 11', 12') und dem zweiten und dem dritten Abschnitt (12, 13; 12', 13') Bereiche der Leitung vorgesehen sind, in welchen die Strömungsrichtung der Abgase im Wesentlichen umgekehrt wird.

7. Partikelfilteranordnung (10, 10') nach Anspruch 6, **dadurch gekennzeichnet, dass** in wenigstens einem der Bereiche ein Katalysator (26; 26') angeordnet ist.

8. Partikelfilteranordnung (10, 10') nach einem der Ansprüche 1 bis 7, **dadurch gekennzeichnet, dass** die ersten, zweiten und dritten Abschnitte der Leitung (11, 12, 13; 11', 12', 13') konzentrisch zueinander angeordnet sind.

9. Partikelfilteranordnung (10, 10') nach einem der vorhergehenden Ansprüche, **dadurch gekennzeichnet, dass** einer der ersten, zweiten und dritten Abschnitte (11, 12, 13; 11', 12', 13') die Form eines Zylinders aufweist und die beiden anderen Abschnitte die Form eines Rohrs aufweisen.

10. Partikelfilteranordnung (10, 10') nach einem der vorhergehenden Ansprüche, **dadurch gekennzeichnet, dass** die ersten und zweiten Abschnitte (11, 12; 11', 12') und/oder die zweiten und dritten Abschnitte (12, 13; 12', 13') und/oder die ersten und dritten Abschnitte (11, 13; 11', 13') der Leitung durch eine gemeinsame Wandung (17, 18; 17', 18') getrennt sind.

11. Partikelfilteranordnung (10, 10') nach einem der Ansprüche 1 bis 10, **dadurch gekennzeichnet, dass** das Verteilungs- und Umlenkelement zur Führung der ersten und zweiten Abgasströme jeweilige Kanäle aufweist, wobei wenigstens ein Teil der Außenwandung des Kanals des ersten Abgasstroms die Innenwandung des Kanals des zweiten Abgasstroms bildet.

12. Partikelfilteranordnung (10, 10') nach einem der vorhergehenden Ansprüche, **dadurch gekennzeichnet, dass** die Partikelfilteranordnung (10, 10') im Wesentlichen symmetrisch zu einer Mittelachse ausgebildet ist.

13. Partikelfilteranordnung (10, 10') nach einem der vorhergehenden Ansprüche, **dadurch gekennzeichnet, dass** die Partikelfilteranordnung (10, 10') in Richtung vom Einlaß zum Auslaß wenigstens folgende Abschnitte aufweist:
a) einen ersten Abschnitt (c, c') der Partikelfilteranordnung (10; 10'), welcher das Verteilungs- und Umlenkelement für die Abgase aufweist;
b) einen zweiten Abschnitt (d; d') der Partikelfilteranordnung (10; 10'), welcher den wenigstens einen Partikelfilter aufweist; und
c) einen dritten Abschnitt (e, e') der Partikelfilteranordnung (10; 10'), welcher ein Umlenkelement für die Abgase aufweist.

14. Partikelfilteranordnung (10, 10') nach Anspruch 13, **dadurch gekennzeichnet, dass** die ersten, zweiten und dritten Abschnitte der Leitung (11, 12, 13; 11', 12', 13') im zweiten Abschnitt (d; d') der Partikelfilteranordnung (10, 10') angeordnet sind.

15. Partikelfilteranordnung (10, 10') nach einem der vorhergehenden Ansprüche, **dadurch gekennzeichnet, dass** die Partikelfilteranordnung (10, 10') einen in Strömungsrichtung der Abgase unmittelbar hinter dem Einlaß und/oder vor dem ersten Abschnitt der Leitung angeordneten Katalysator (6, 6') aufweist.

16. Fartikelfilteranordnung (10, 10') nach einem der vorhergehenden Ansprüche, **dadurch gekennzeichnet, dass** die Partikelfilteranordnung (10, 10') einen in Strömungsrichtung der Abgase unmittelbar vor dem Auslaß und/oder im oder hinter dem zweiten oder dritten Abschnitt (13; 13') der Leitung angeordneten Feinstaubfilter aufweist.

17. Partikelfilteranordnung (10; 10') nach einem der vorhergehenden Ansprüche, **dadurch gekennzeichnet, dass** das Verteilungs- und Umlenkelement derart ausgebildet ist, dass sich die ersten und zweiten Abgasströme durchkreuzen, ohne sich zu vermischen.

18. Verfahren zum Filtern von Abgasen einer.Brennkraftmaschine oder -anlage, insbesondere einer Dieselbrennkraftmaschine mit einer Partikelfilteranordnung (10, 10') nach einem der Ansprüche 1 bis 17, wobei die Partikelfilteranordnung (10, 10') einen Einlaß und einen Auslaß aufweist, wobei im Strömungspfad der Abgase zwischen Einlaß und Auslaß wenigstens ein Partikelfilter (4) angeordnet ist, wobei die Abgase in einer Leitung geführt werden, wobei die Leitung einen ersten Abschnitt (11; 11') aufweist, in welchem die Abgase im Wesentlichen in Richtung Auslaß geführt werden, wobei die Leitung ferner einen zweiten Abschnitt (12; 12') aufweist, in welchem die Abgase im Wesentlichen in Richtung Einlaß geführt werden, und wobei die Leitung ferner einen dritten Abschnitt (13; 13') aufweist, in welchem die Abgase im Wesentlichen in Richtung Auslaß geführt werden, wobei ein erster vom Einlaß kommender Abgasstrom zum ersten Abschnitt (11; 11') der Leitung durch ein Verteilungs- und Umlenkelement der Partikelfilteranordnung (10, 10') geführt wird und ein vom zweiten Abschnitt der Leitung (12; 12') ankommender zweiter Abgasstrom durch das Verteilungs- und Umlenkelement der Partikelfilteranordnung (10, 10') zum dritten Abschnitt (13; 13') der Leitung umgelenkt wird, und wobei das Verteilungs- und Umlenkelement eine sternförmige Umlenkung realisiert, bei der sich verschiedene Abgasströme mehrfach überkreuzen, ohne dass diese sich vermischen.

## Claims

1. Particle filter arrangement (10, 10') for filtering exhaust gases of an internal combustion engine or plant, in particular of a diesel internal combustion engine, having an inlet and an outlet, with at least one particle filter (4) being arranged in the flow path of the exhaust gases between the inlet and outlet, with the exhaust gases being conducted in a line, with the line comprising a first section (11; 11') in which the exhaust gases are conducted substantially in the direction to the outlet, with the line further comprising a second section (12; 12') in which the exhaust gases are conducted substantially in the direction to the inlet, wherein the line further comprises a third section (13; 13') in which the exhaust gases are conducted substantially in the direction to the outlet, wherein the particle filter arrangement (10, 10') comprises a distributing and deflecting element which conducts a first exhaust-gas flow, which comes from the inlet, to the first section (11; 11') of the line and which deflects a second exhaust-gas flow, which arrives from the second section of the line (12; 12'), to the third section (13; 13') of the line, and wherein the distributing and deflecting element realizes a star-shaped deflection in which different exhaust-gas flows cross several times without being mixed.

2. Particle filter arrangement (10, 10') as claimed in claim 1, **characterized in that** the exhaust gases flow through the first, second and third sections (11, 12, 13; 11', 12', 13') of the line in series.

3. Particle filter arrangement (10, 10') as claimed in claim 1 or 2, **characterized in that** the at least one particle filter (4) is arranged in the first, second or third section (11, 12, 13; 11', 12', 13') of the line.

4. Particle filter arrangement (10, 10') as claimed in any of claims 1 to 3, **characterized in that** a further particle filter (14) is arranged in the first, second and third section (11, 12, 13; 11', 12', 13').

5. Particle filter arrangement (10, 10') as claimed in claim 3 or 4, **characterized in that** the at least one particle filter (4) and the further particle filter (14) are formed in one piece as a filter monolith.

6. Particle filter arrangement (10, 10') as claimed in any of claims 1 to 5, **characterized in that** regions of the line in which the flow direction of the exhaust gases is substantially reversed are provided between the first and the second section (11, 12; 11', 12') and the second and the third section (12, 13; 12', 13').

7. Particle filter arrangement (10, 10') as claimed in claim 6, **characterized in that** a catalytic converter (26; 26') is arranged in at least one of the regions.

8. Particle filter arrangement (10, 10') as claimed in any of claims 1 to 7, **characterized in that** the first, second and third sections of the line (11, 12, 13; 11', 12', 13') are arranged concentrically with respect to one another.

9. Particle filter arrangement (10, 10') as claimed in any of the preceding claim, **characterized in that** one of the first, second and third sections (11, 12, 13; 11', 12', 13') has the shape of a cylinder, and the two other sections have the shape of an annular cylinder.

10. Particle filter arrangement (10, 10') as claimed in any of the preceding claims, **characterized in that** the first and second sections (11, 12; 11', 12') and/or the second and third section (12, 13; 12', 13') and/or the first and third sections (11, 13; 11', 13') of the line are separated by a common wall (17, 18; 17', 18').

11. Particle filter arrangement (10, 10') as claimed in any of claims 1 to 10, **characterized in that** the distributing and deflecting element comprises respective ducts for conducting the first and second exhaust-gas flows, with at least a part of the outer wall of the duct of the first exhaust-gas flow forming the inner wall of the duct of the second exhaust-gas flow.

12. Particle filter arrangement (10, 10') as claimed in any of the preceding claims, **characterized in that** the particle filter arrangement (10, 10') is formed substantially symmetrically with respect to a central axis.

13. Particle filter arrangement (10, 10') as claimed in any of the preceding claims, **characterized in that** the particle filter arrangement (10, 10') has at least the following sections in the direction from the inlet to the outlet:
a) a first section (c, c') of the particle filter arrangement (10; 10') which comprises the distributing and deflecting element for the exhaust gases;
b) a second section (d; d') of the particle filter arrangement (10; 10') which comprises the at least one particle filter; and
c) a third section (e, e') of the particle filter arrangement (10; 10') which comprises a deflecting element for the exhaust gases.

14. Particle filter arrangement (10, 10') as claimed in claim 13, **characterized in that** the first, second and third sections of the line (11, 12, 13; 11', 12', 13') are arranged in the second section (d; d') of the particle filter arrangement (10, 10').

15. Particle filter arrangement (10, 10') as claimed in any of the preceding claims, **characterized in that** the particle filter arrangement (10, 10') comprises a catalytic converter (6, 6') arranged directly downstream of the inlet and/or upstream of the first section of the line in the flow direction of the exhaust gases.

16. Particle filter arrangement (10, 10') as claimed in any of the preceding claims, **characterized in that** the particle filter arrangement (10, 10') comprises a particulate matter filter arranged directly upstream of the outlet and/or in or downstream of the second or third section (13; 13') of the line in the flow direction of the exhaust gases.

17. Particle filter arrangement (10; 10') as claimed in any of the preceding claims, **characterized in that** the distributing and deflecting element is configured such that the first and second exhaust-gas flows cross without being mixed.

18. Method of filtering exhaust gases of an internal combustion engine or plant, in particular of a diesel internal combustion engine, with a particle filter arrangement (10, 10') as claimed in any of claims 1 to 17, wherein the article filter arrangement (10, 10') comprises an inlet and an outlet, with at least one particle filter (4) being arranged in the flow path of the exhaust gases between the inlet and outlet, with the exhaust gases being conducted in a line, with the line comprising a first section (11; 11') in which the exhaust gases are conducted substantially in the direction to the outlet, with the line further comprising a second section (12; 12') in which the exhaust gases are conducted substantially in the direction to the inlet, and wherein the line further comprises a third section (13; 13') in which the exhaust gases are conducted substantially in the direction to the outlet, wherein a first exhaust-gas flow arriving from the inlet is conducted by a distributing and deflecting element of the particle filter arrangement (10, 10') to the first section (11; 11') of the line and a second exhaust-gas flow arriving from the second section of the line (12; 12') is deflected by the distributing and deflecting element of the particle filter arrangement (10, 10') to the third section (13; 13') of the line, and wherein the distributing and deflecting element realizes a star-shaped deflection in which different exhaust-gas flows cross several times without being mixed.

## Revendications

1. Dispositif à filtre à particules (10, 10') pour filtrer les gaz d'échappement d'un moteur ou d'une installation à combustion interne, en particulier d'un moteur diesel, avec une admission et une sortie, étant précisé qu'au moins un filtre à particules (4) est disposé sur la trajectoire d'écoulement des gaz d'échappement entre l'admission et la sortie, que les gaz d'échappement passent dans une conduite, que la conduite présente une première section (11 ; 11') dans laquelle les gaz d'échappement passent globalement en direction de la sortie, que la conduite présente par ailleurs une deuxième section (12 ; 12') dans laquelle les gaz d'échappement passent globalement en direction de l'admission, que la conduite présente par ailleurs une troisième section (13 ; 13') dans laquelle les gaz d'échappement passent globalement en direction de la sortie, que le dispositif à filtre à particules (10, 10') présente un élément de répartition et de déviation qui guide vers la première section (11 ; 11') de la conduite un premier courant de gaz d'échappement provenant de l'admission et qui dévie vers la troisième section (13 ; 13') de la conduite un deuxième courant de gaz d'échappement provenant de la deuxième section de la conduite (12 ; 12'), et que l'élément de répartition et de déviation réalise une déviation en étoile, avec laquelle différents courants de gaz d'échappement se croisent plusieurs fois sans se mélanger.

2. Dispositif à filtre à particules (10, 10') selon la revendication 1, **caractérisé en ce que** les gaz d'échappement traversent successivement la première, la deuxième et la troisième section (11, 12, 13 ; 11', 12', 13') de la conduite.

3. Dispositif à filtre à particules (10, 10') selon la revendication 1 ou 2, **caractérisé en ce que** le ou les filtres à particules (4) sont disposés dans la première, la deuxième ou la troisième section (11, 12, 13 ; 11', 12', 13') de la conduite.

4. Dispositif à filtre à particules (10, 10') selon l'une des revendications 1 à 3, **caractérisé en ce qu'**un filtre à particules supplémentaire (14) est disposé dans la première, la deuxième ou la troisième section (11, 12, 13 ; 11', 12', 13').

5. Dispositif à filtre à particules (10, 10') selon la revendication 3 ou 4, **caractérisé en ce que** le ou les filtres à particules (4) et le filtre à particules supplémentaire (14) sont réalisés d'une seule pièce sous la forme d'un filtre monolithique.

6. Dispositif à filtre à particules (10, 10') selon l'une des revendications 1 à 5, **caractérisé en ce qu'**il est prévu entre les première et deuxième sections (11, 12 ; 11', 12') et entre les deuxième et troisième sections (12, 13 ; 12', 13') des zones de la conduite dans lesquelles le sens d'écoulement des gaz d'échappement est globalement inversé.

7. Dispositif à filtre à particules (10, 10') selon la revendication 6, **caractérisé en ce qu'**un catalyseur (26 ; 26') est disposé dans l'une au moins desdites zones.

8. Dispositif à filtre à particules (10, 10') selon l'une des revendications 1 à 7, **caractérisé en ce que** les première, deuxième et troisième sections de la conduite (11, 12, 13 ; 11', 12', 13') sont disposées de manière concentrique.

9. Dispositif à filtre à particules (10, 10') selon l'une des revendications précédentes, **caractérisé en ce que** l'une des première, deuxième et troisième sections (11, 12, 13 ; 11', 12', 13') a la forme d'un cylindre, et les deux autres sections ont la forme d'un tube.

10. Dispositif à filtre à particules (10, 10') selon l'une des revendications précédentes, **caractérisé en ce que** les première et deuxième sections (11, 12 ; 11', 12') et/ou les deuxième et troisième sections (12, 13 ; 12', 13') et/ou les première et troisième sections (11, 13 ; 11', 13') de la conduite sont séparées par une cloison commune (17, 18 ; 17', 18').

11. Dispositif à filtre à particules (10, 10') selon l'une des revendications 1 à 10, **caractérisé en ce que** l'élément de répartition et de déviation pour guider les premier et deuxième courants de gaz d'échappement présente des conduits respectifs, une partie au moins de la paroi extérieure du conduit du premier courant de gaz d'échappement formant la paroi intérieure du conduit du deuxième courant de gaz d'échappement.

12. Dispositif à filtre à particules (10, 10') selon l'une des revendications précédentes, **caractérisé en ce qu'**il a une forme globalement symétrique par rapport à un axe médian.

13. Dispositif à filtre à particules (10, 10') selon l'une des revendications précédentes, **caractérisé en ce qu'**il présente de l'admission vers la sortie au moins les sections suivantes :
a) une première section (c, c') du dispositif à filtre à particules (10 ; 10'), qui comporte l'élément de répartition et de déviation pour les gaz d'échappement ;
b) une deuxième section (d ; d') du dispositif à filtre à particules (10 ; 10'), qui comporte le ou les filtre à particules ;
c) une troisième section (e, e') du dispositif à filtre à particules (10 ; 10'), qui comporte un élément de déviation pour les gaz d'échappement.

14. Dispositif à filtre à particules (10, 10') selon la revendication 13, **caractérisé en ce que** les première, deuxième et troisième sections de la conduite (11, 12, 13 ; 11', 12', 13') sont disposées dans la deuxième section (d ; d') du dispositif à filtre à particules (10, 10').

15. Dispositif à filtre à particules (10, 10') selon l'une des revendications précédentes, **caractérisé en ce qu'**il comporte un catalyseur (6, 6) qui est disposé juste derrière l'admission, dans le sens d'écoulement des gaz d'échappement, et/ou devant la première section de la conduite.

16. Dispositif à filtre à particules (10, 10') selon l'une des revendications précédentes, **caractérisé en ce qu'**il comporte un filtre pour poussière fine qui est disposé juste avant la sortie, dans le sens d'écoulement des gaz d'échappement et/ou dans ou derrière la deuxième ou la troisième section (13 ; 13') de la conduite.

17. Dispositif à filtre à particules (10, 10') selon l'une des revendications précédentes, **caractérisé en ce que** l'élément de répartition et de déviation est conçu pour que les premier et deuxième courants de gaz d'échappement se croisent sans se mélanger.

18. Procédé pour filtrer les gaz d'échappement d'un moteur ou d'une installation à combustion interne, en particulier d'un moteur diesel, avec un dispositif à filtre à particules (10, 10') selon l'une des revendications 1 à 17, étant précisé que le dispositif à filtre à particules (1.0, 10') comporte une admission et une sortie, qu'au moins un filtre à particules (4) est disposé sur la trajectoire d'écoulement des gaz d'échappement entre l'admission et la sortie, que les gaz d'échappement passent dans une conduite, que la conduite présente une première section (11 ; 11') dans laquelle les gaz d'échappement passent globalement en direction de la sortie, que la conduite présente par ailleurs une deuxième section (12 ; 12') dans laquelle les gaz d'échappement passent globalement en direction de l'admission, que la conduite présente par ailleurs une troisième section (13 ; 13') dans laquelle les gaz d'échappement passent globalement en direction de la sortie, qu'un premier courant de gaz d'échappement provenant de l'admission est guidé vers la première section (11 ; 11') de la conduite par un élément de répartition et de déviation du dispositif à filtre à particules (10, 10') tandis qu'un deuxième courant de gaz d'échappement provenant de la deuxième section de la conduite (12 ; 12') est dévié vers la troisième section (13 ; 13') de la conduite par l'élément de répartition et de déviation du dispositif à filtre à particules (10, 10'), et que l'élément de répartition et de déviation réalise une déviation en étoile, avec laquelle différents courants de gaz d'échappement se croisent plusieurs fois sans se mélanger.
